# EUROPÄISCHE PATENTSCHRIFT

(11) **EP 0 817 912 B1**
(45) Veröffentlichungstag und Bekanntmachung des Hinweises auf die Patenterteilung: **26.04.2000**
(21) Anmeldenummer: 96907380.8
(22) Anmeldetag: 07.03.1996
(51) Int. Cl.: F02M 31/06, G05D 23/13, B29C 65/06

(54) **KUNSTSTOFFGEHÄUSE**
PLASTICS HOUSING
BOITIER EN PLASTIQUE

(30) Priorität: 11.03.1995 DE 19508921
(43) Veröffentlichungstag der Anmeldung: 14.01.1998
(73) Patentinhaber: FILTERWERK MANN & HUMMEL GMBH, 71631 Ludwigsburg (DE)
(72) Erfinder: HAINLE, Rudi, D-71642 Ludwigsburg (DE); KLOTZ, Arthur, D-71686 Remseck (DE); LEIPELT, Rudolf, D-71672 Marbach (DE)
(86) Internationale Anmeldenummer: EP9600976
(87) Internationale Veröffentlichungsnummer: WO9628653

(56) Entgegenhaltungen:
- EP-A- 0 223 695
- GB-A- 2 235 037
- US-A- 4 919 987

## Beschreibung

Die Erfindung betrifft ein Kunststoffgehäuse nach dem Oberbegriff des Hauptanspruchs.

Ein solches Kunststoffgehäuse kann insbesondere verwendet werden, um einen Wachsthermostat in einem Stellklappengehäuse zur Regelung der Temperatur der Ansaugluft von gemischverdichteten Brennkraftmaschinen in axialer Richtung lagerichtig zu positionieren.

Es ist aus der DE-PS 28 16 727 eine Vorrichtung zur Regelung der Temperatur der Ansaugluft bekannt. Bei dieser befindet sich ein Wachsthermostat in einem zweiteiligen Gehäuse, wobei die beiden Teile miteinander verschraubt sind. Zum Positionieren des Wachsthermostaten wird das eine Gehäuseteil gegenüber dem anderen so lange gedreht, bis die richtige Lage eingestellt ist. Anschließend erfolgt mit einem geeigneten Mittel, wie zum Beispiel einem Klebstoff, die Fixierung und Dichtung dieser eingestellten Lage. Es wird deutlich, daß diese Justage sehr aufwendig ist und zwar sowohl was das Material betrifft (zusätzliche Messingschraube) als auch montagetechnisch und keine absolute Sicherheit für die nötige Dichtheit und gegen ein nachträgliches Verdrehen oder Verändern erzielbar ist.

Der Erfindung liegt deshalb die Aufgabe zugrunde, ein Kunststoffgehäuse zu schaffen, mit welchem eine Justage eines Stellelements in einfacher Weise durchführbar ist und die Justage durch Umwelteinflüsse oder andere Eingriffe nachträglich nicht mehr verändert werden kann.

Diese Aufgabe wird ausgehend von dem Oberbegriff des Hauptanspruchs durch dessen kennzeichnende Merkmale gelöst.

Der Kerngedanke der Erfindung liegt in der Schaffung von einem Kunststoffgehäuse bestehend aus Ober- und Unterteil, welches derart gestaltet ist, daß eine Verschweißung der beiden Teile möglich ist. Dabei ist zu berücksichtigen, daß die Schweißverbindungsstellen eine ausreichend große axiale Lagetoleranz ausgleichen können, das heißt die Verbindungsstellen sind mit einem Toleranzbereich versehen, der eine Verschweißung innerhalb eines bestimmten Toleranzrahmens zuläßt.

Ein weiterer Vorteil der Erfindung liegt darin, daß der Zusammenbau des Kunststoffgehäuses und die Justage des Stellelements in einem Arbeitsgang erfolgt und eine gasdichte Verbindung der beiden Teile entsteht.

Gemäß einer vorteilhaften Ausgestaltung der Erfindung erfolgt die Verschweißung der beiden Teile mit einem Rotationsschweißverfahren. Selbstverständlich sind auch andere Schweißverfahren möglich.

Zur einfachen Vormontage der Bauteile, das heißt des Stellelements bzw. des Wachsthermostats mit Ober- und Unterteil des Kunststoffgehäuses sowie eventuell noch weitere in dem Gehäuse anzuordnenden Teile, weisen Ober- und Unterteil Schnappverbindungen auf. Aufgrund dieser Schnappverbindung ist es möglich, die einzelnen Bauteile in dem Gehäuse anzuordnen und das Gehäuse zusammenzuschnappen und in diesem vormontierten Zustand eine Temperierung des Wachsthermostaten vorzunehmen. Anschließend erfolgt das Justageschweißen, das heißt, das Schweißen, Dichten und Justieren in einem einzigen Arbeitsgang.

Zur Unterbringung des verschieden großen Schweißaustriebs an der Schweißstelle ist gemäß einer weiteren Ausgestaltung der Erfindung je eine Kammer vor und hinter der Schweißstelle vorgesehen. In diesen Kammern sammelt sich der Schweißaustrieb, so daß funktionsstörende Elemente wie ein Schweißgrat oder ähnliches, wirksam verhindert werden.

Diese und weitere Merkmale von bevorzugten Weiterbildungen der Erfindung gehen außer aus den Ansprüchen auch aus der Beschreibung und den Zeichnungen hervor.

Ausführungsbeispiele der Erfindung sind in den Zeichnungen dargestellt und werden im folgenden näher erläutert. Die Zeichnungen zeigen:
- Figur 1 bis Figur 3: in einer Schnittdarstellung der Ablauf des Justage-Schweißens eines Gehäuses,
- Figur 4: eine Kalt-Warmluft-Regeleinrichtung.

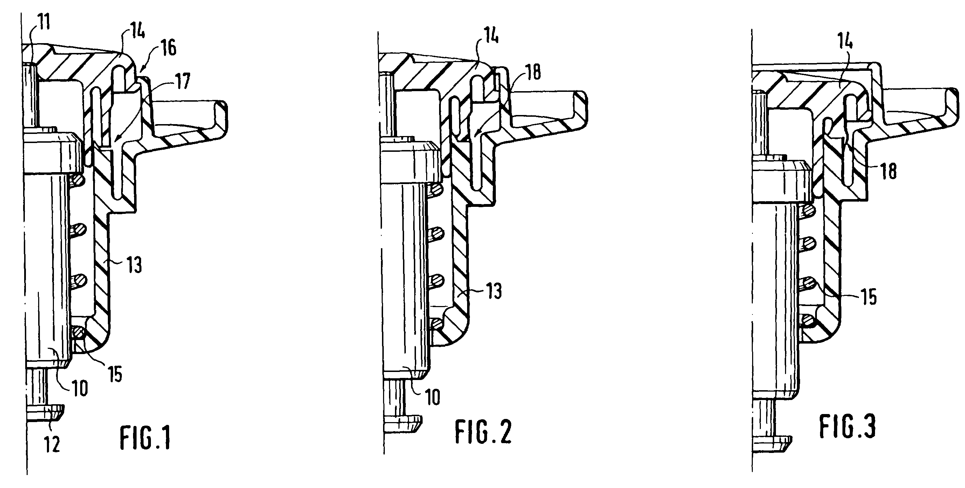

In Figur 1 ist ein Wachsthermostat 10 dargestellt. Dieser mit einem Antriebsstift 11 und einem Befestigungsbolzen 12 gezeigt. Der Wachsthermostat befindet sich in einem Kunststoffgehäuse, bestehend aus Gehäuseunterteil 13 und Gehäuseoberteil 14. Eine Druckfeder 15 sorgt dafür, daß der Antriebsstift 11 des Wachsthermostaten 10 grundsätzlich an dem Gehäuseoberteil 14 anliegt. Das Gehäuseoberteil 14 ist mittels einer Schnappverbindung 15 mit dem Gehäuseunterteil 13 verrastet. Diese Stellung ist die Vormontagestellung, das heißt ein Zusammenbau der Teile erfolgt dadurch, daß in das Gehäuseunterteil 13 der Wachsthermostat 10 sowie die Druckfeder 15 eingelegt und anschließend das Gehäuseoberteil aufgesteckt wird. Im Bereich 17 erfolgt anschließend das Verschweißen der beiden Gehäuseteile. Dieses ist in Figur 2 dargestellt. Das Verschweißen wird mit einem Rotationsschweißverfahren durchgeführt. Das Gehäuseunterteil liegt während des Schweißvorgangs in einer Aufnahme. Das Gehäuseoberteil wird durch das Schweißwerkzeug in eine Drehbewegung versetzt und mit Druck axial auf das Gehäuseunterteil verschoben. In der Schweißzone 18 verbinden sich beide Teile miteinander. Das Verschweißen der beiden Teile erfolgt bis zu einer Schweißtiefe, die erforderlich ist, um das Maß A, das heißt das Justage-Maß des Wachsthermostaten zu erreichen.

In Figur 3 ist die maximal mögliche Eindringtiefe zwischen Gehäuseoberteil 14 und Gehäuseunterteil 15 im Bereich der Schweißzone 18 dargestellt. Selbstverständlich kann die konstruktive Gestaltung von Ober- bzw. Unterteil auch einen größeren Schweißweg zulassen.

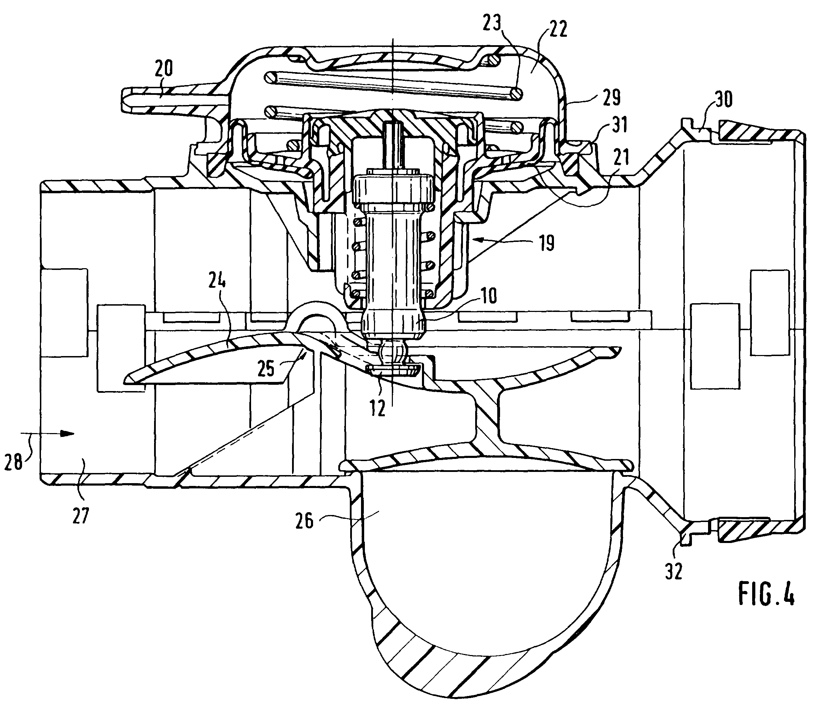

Figur 4 zeigt eine komplette Kalt-Warmluft-Regeleinrichtung, die mit einem schweißjustierten Kunststoffgehäuse des Wachsthermostaten ausgestattet ist. Der Wachsthermostat 10 ist in dem aus Gehäuseunterteil und Gehäuseoberteil bestehenden Kunststoffgehäuse 19 angeordnet. Die Justageschweißung ist bereits erfolgt. An dem Kunststoffgehäuse 19 ist eine Membran 21 aus Gummi und eine, einen Steuerdruckraum 22 durchsetzende Rückstellfeder 23 angeordnet. Dieser Steuerdruckraum 22 wird durch ein Gehäuse 29 gebildet, welches mit dem Luftführungsoberteil 30 an der Verbindungsfläche 31 dicht verschweißt ist. Das Luftführungsoberteil 30 ist mit dem Luftführungsunterteil 32 verschnappt. Der Steuerdruckraum ist über eine Steuerdruckleitung mit einem hier nicht dargestellten Ansaugkanal einer Brennkraftmaschine verbunden. Eine Steuerklappe 24 ist an dem Befestigungsbolzen 12 des Wachsthermostaten 10 beweglich befestigt, wobei die Steuerklappe 24 in einem Lager 25 geführt ist. Die Steuerklappe 24 verschließt in der hier gezeigten Stellung den Warmluftkanal 26 und gibt den Kaltluftkanal 27 zum Einströmen kalte Luft gemäß dem Pfeil 28 frei. In der anderen hier nicht gezeigten Endstellung verschließt die Steuerklappe 24 den Kaltluftkanal und öffnet damit gleichzeitig den Warmluftkanal 26.

## Patentansprüche

1. Kunststoffgehäuse bestehend aus einem Oberteil (14), einem Unterteil (13) und einem zwischen beide Teile anzuordnendes Stellelement (10) insbesondere einem Wachsthermostat für die Regelung der Temperatur der Ansaugluft von gemischverdichtenden Brennkraftmaschinen wobei die Position des Stellelements (10) bei der Montage justiert wird, dadurch gekennzeichnet, daß die Positionierung des Stellelements (10) durch axial lagerichtiges Verschweißen von Oberteil (14) und Unterteil (13) des Kunststoffgehäuses (19) erfolgt.

2. Kunststoffgehäuse nach Anspruch 1, dadurch gekennzeichnet, daß Ober- und Unterteil (14, 13) rotationsverschweißt sind.

3. Kunststoffgehäuse nach Anspruch 1 oder 2, dadurch gekennzeichnet, daß eine Vormontage von Ober- und Unterteil (14, 13) mittels einer Schnapp- oder Rastverbindung (16) erfolgt.

4. Kunststoffgehäuse nach einem der vorherigen Ansprüche, dadurch gekennzeichnet, daß eine oder zwei Kammern an geeigneter Stelle für den Schweißaustrieb vorgesehen ist.

5. Kunststoffgehäuse nach einem oder vorherigen Ansprüche, dadurch gekennzeichnet, daß die Schweißverbindung von Ober- und Unterteil eine gasdichte Verbindung ist.

## Revendications

1. Boîtier en matière plastique se composant d'une partie supérieure (14), d'une partie inférieure (13) et d'un élément de réglage (10), disposé entre les deux parties, en particulier d'un thermostat à cire pour le réglage de la température de l'air d'admission de moteurs à combustion interne à compression du mélange, la position de l'élément de réglage (10) étant ajustée lors du montage,
caractérisé en ce que
la mise en place de l'élément de réglage (10) a lieu en soudant en position correcte axialement la partie supérieure (14) et la partie inférieure (13) du boîtier (19) en matière plastique.

2. Boîtier en matière plastique selon la revendication 1,
caractérisé en ce que
la partie inférieure et la partie supérieure (13, 14) sont soudées par rotation.

3. Boîtier en matière plastique selon la revendication 1 ou 2,
caractérisé en ce qu'
on effectue un montage préalable de la partie supérieure et de la partie inférieure (14, 13) au moyen d'un assemblage par enfoncement ou par encliquetage (16).

4. Boîtier en matière plastique selon l'une des revendications précédentes,
caractérisé en ce qu'
on prévoit une ou deux chambres à un endroit approprié pour le bourrelet de soudage.

5. Boîtier en matière plastique selon l'une des revendications précédentes,
caractérisé en ce que
la liaison par soudage de la partie supérieure et de la partie inférieure est une liaison étanche aux gaz.

## Claims

1. Plastics material housing, comprising an upper part (14), a lower part (13) and a control element (10), which is to be disposed between both parts, more especially a wax thermostat for regulating the temperature of the intake air of mixture-compressing internal combustion engines, the position of the control element being adjusted during assembly, characterised in that the positioning of the control element (10) is effected by bonding together upper part (14) and lower part (13) of the plastics material housing (19) in the correct axial position.

2. Plastics material housing according to claim 1, characterised in that upper and lower parts (14, 13) are rotationally bonded.

3. Plastics material housing according to claim 1 or 2, characterised in that a pre-assembly of upper and lower parts (14, 13) is effected by means of a snap-fitting or locking connection (16).

4. Plastics material housing according to one of the previous claims, characterised in that one or two chambers is or are provided at a suitable location for the bonding waste.

5. Plastics material housing according to one of the previous claims, characterised in that the bonded joint between upper part and lower part is a gastight joint.
